# EUROPEAN PATENT APPLICATION

(11) **EP 1 939 155 A2**
(43) Date of publication of application: **02.07.2008**
(21) Application number: 07122618.7
(22) Date of filing: 07.12.2007
(51) Int. Cl.: C04B 35/599

(54) **Ceramic material and cutting tools made thereof for toughness demanding operations**

(30) Priority: 27.12.2006 SE 0602811
(71) Applicant: Sandvik Intellectual Property AB, 81181 Sandviken (SE)
(72) Inventor: Östhols, Erik, 141 31 Huddinge (SE)
(74) Representative: Hägglöf, Henrik

(57) **Abstract**

The present invention relates to a ceramic material based on based on β-sialon (Si_{6-z}Al_{z}O_{z}N), α-sialon, a refractory hard phase comprising TiN, Ti(C,N) or TiC, an intergranular amorphous or partly crystalline phase, and containing yttrium. The β-sialon phase has a z-value of 0.3-0.8. The content of refractory hard phase is 10-20 percent by weight. The material is particularly useful as cutting tool inserts for the machining of heat resistant super alloys (HRSA).

## Description

The present invention comprises a ceramic silicon nitride based material suitable for machining of metals by turning, drilling, milling or similar chip forming machining methods.

### Background of the invention

Ceramic materials for cutting tool applications are, due to their high hot hardness, suitable for machining work-piece materials of high hardness, high tensile strength at elevated temperatures and low heat-diffusivity, particularly for self-hardening materials such as, e.g., some types of nickel- and cobalt-based materials, sometimes designated as heat resistant super alloys (HRSA) .

Silicon nitride based cutting tools are often used for machining grey cast iron and HRSA. Many silicon nitride based materials for cutting tools are manufactured using aluminium oxide (Al₂O₃) as a sintering aid. Aluminium and oxygen have the ability to replace silicon and nitrogen respectively in the crystal structure of silicon nitride, thereby creating a so-called sialon ceramic, consisting of Si-Al-O-N, sometimes additionally stabilized by a cation Meⁿ⁺, where Me can be chosen from a large number of (rare-earth) metals and lanthanides of suitable ionic radius (r < 1.0 Å), such as Y, Yb, Dy, Lu, Li, Ca, Mg, Sc etc.

Many sialon phases have been detected and characterized, see Izhevskiy V A, Genova L A, Bressiani J C and Aldinger F, "Progress in SiAlON ceramics", J. Eur. Ceram. Soc. 20, 2275-2295 (2000), but the predominant phases used in cutting tool materials remain α-sialon phase, RₓSi₁₂₋₍ₘ₊ₙ₎Al₍ₘ₊ₙ₎OₙN₍₁₆₋ₙ₎ (1.0 < m < 2.7; n < 1.2), where R is one of the aforementioned metals or lanthanides with ionic radius < 1.0 Å, and β-sialon: Si_{6-z}Al_{z}O_{z}N_{8-z} (0 < z < 4.2).

During sintering, the raw materials used, usually a mixture of silicon nitride, alumina and AlN or some sialon polyphase together with an oxide of the metal or lanthanide, form a transitionary melt from which the α- and β-sialon phases, and possibly other phases such as YAG (Y₃Al₅O₁₂), melilite (Y₂Si₃O₃N₄), B-phase (Y₂SiAlO₅N), 12H etc. crystallize. After sintering, an amorphous or partly crystalline intergranular phase between the crystalline grains remains. The amount of amorphous phase produced is influenced by the composition of raw materials used, as well as the sintering conditions.

Besides stabilizing the α-sialon phase, the metal ion also functions as a catalyst for the formation of sialon crystals during sintering, and aids the formation of elongated sialon grains, usually in the beta phase, but elongated grains of α-sialon have also been produced, see Fang-Fang X, Shu-Lin W, Nordberg L-O and Ekström T, "Nucleation and Growth of the Elongated α'-SiAlON", J. Eur. Ceram. Soc. 17(13) 1631-1638 (1997). It is also clear, that the choice of metal ion used affects the properties of the amorphous phase, see Sun E Y, Becher P F, Plucknett K P, Hsueh C-H, Alexander K B and Waters S B, "Microstructural Design of Silicon Nitride with Improved Fracture Toughness II: Effects of Yttria and Alumina Additives", J. Am. Ceram. Soc. 81(11) 2831-2840 (1998); Hong Z L, Yoshida H, Ikuhara Y, Sakuma T, Nishimura T and Mitomo M, "The effect of additives on sintering behavior and strength retention in silicon nitride with RE-disilicate", J. Eur. Ceram. Soc. 22, 527-534 (2002).

The z-value in the β-sialon phase affects the hardness, toughness, and grain size distribution in the sintered material, see Ekström T, Nygren M, "SiAlON ceramics", J. Am. Ceram. Soc. 75(2), 259-276 (1992). It also affects the cutting tool properties of the material; lower z-value usually means higher toughness and lower notch wear resistance.

TiN is currently used as an additive in some sialons available commercially for cutting tool applications; its primary function is to decrease abrasive wear and increase fracture toughness, see Ayas E, Kara A, Mandal H, Turan S, Kara F, "Production of alpha-beta SiAlON-TiN/TiCN Composites", Silicates Industriels 69(7-8) 287-292, although one may also speculate on its beneficial impact on thermal shock resistance due to its relatively high thermal conductivity.

GB-A-2155007 discloses a range of sialon materials suitable for use in metal cutting tools, with z-values ranging from 0 to 4.2, an α-sialon content ranging from 10 to 70 % by volume, as well as additions of cubic nitride and carbide particle reinforcement with a weight percent ranging from 0 to 45 % by volume. Different compositions were tried in turning of steel.

WO 2005/016847 describes a method of making and a composition of a sialon material which as sintered material consists of 10-90 by volume of α-sialon and 3-30 % by volume of a cubic nitride or carbide phase, such as SiC, Ti(C,N), TiC, TiN etc.

JP-A-2005231928 discloses a sialon cutting tool material consisting of <= 30 % α-sialon together with β-sialon and 6-30 mol% of TiC, TiN, TiO₂, Ti(C,N) and/or Ti(O,N) as well as Al₂O₃.

US 5,432,132 relates to a silicon nitride based composition for manufacturing sintered ceramic articles, in particular cutting tool inserts, having improved density, hardness and fracture toughness characteristics is described. The amounts of yttrium oxide, aluminum nitride and titanium nitride contained in the silicon nitride based mixture are interrelated by a formula to attain substantially improved abrasion resistance.

The object of the present invention is to provide a sialon based ceramic materials for metal cutting tool purposes with optimal compositions for machining metals, preferably heat resistant super alloys, with a superior toughness.

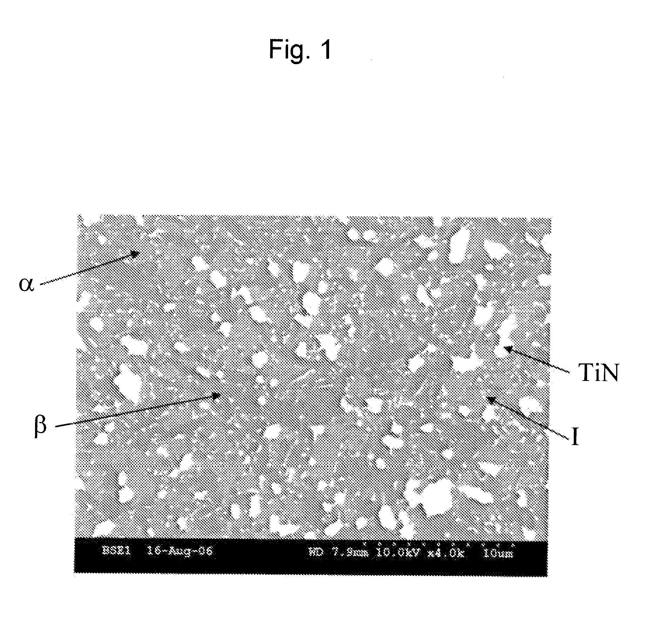

Fig 1 shows a SEM image in backscattered mode of the structure of a sialon material according to the invention in which
α - α-sialon
β - β-sialon
I - intergranular phase and
TiN - titanium nitride.

The present invention provides a silicon nitride based material which comprises, in addition to intergranular amorphous and/or crystalline phase, β-sialon, i.e. Si_{6-z}Al_{z}O_{z}N, preferably with 0.3 < z < 0.8, α-sialon, i.e. YₓSi₁₂₋₍ₘ₊ₙ₎Al₍ₘ₊ₙ₎OₙN₍₁₆₋ₙ₎, where the weight ratio α-SiAlON/ (α-SiAlON + β-sialon) is 0.2-0.4, as measured by Rietveld refinement, see Rietveld, H.M., Line profiles of neutron powder-diffraction peaks for structure refinement, Acta Cryst. 22, 151-152 (1967); Rietveld, H.M., A profile refinement method for nuclear and magnetic structures, J. Appl. Cryst. 2, 65-71 (1969); Hill, R.J., Howard, C.J., Quantitative phase analysis from neutron powder diffraction data using the Rietveld method, J. Appl. Cryst. 20, 467-474 (1987), of theoretical XRD spectra to the measured spectra.

The material contains yttrium, 3.5-6 percent by weight, preferably 4-5 percent by weight measured as elemental Y. The content of aluminium, measured as elemental Al, is 5-7 weight%. The amount of intergranular phase is between 3 and 10 %. The material also contains other hard, essentially inert constituents, TiN, TiC or Ti(C,N) or mixtures thereof, preferably TiN or, alternatively, preferably Ti(C,N), in amounts of 10-20 wt-%, preferably 13-17 wt-% of grains with a size of 1-5 µm. In addition, the material may contain up 3 percent by weight of YAG, B-phase or melilite. The material has negligible porosity.

The material is particularly useful a material for cutting tool inserts for machining of heat resistant super alloys (HRSA). Such cutting tool inserts can be provided with coatings of TiN, Ti(C,N), Al₂O₃ or (Ti,Al)N or any combination thereof. The application area is primarily toughness demanding operations with forged skin, light intermittence and less stable conditions.

Sialon materials according to the invention are made by powder metallurgical methods such as milling, pressing and sintering. Suitable proportions of powders of silicon nitride, titanium nitride (or titanium carbide or titanium carbonitride), alumina, yttria and aluminium nitride, polyphase 21R, 12H, 27R or 15H are milled and pressed to blanks. The blanks are placed on sintering trays without embedding in a powder bed and burnt off separately, and then sintered in a gas pressure sintering furnace. The final part of the sintering takes place at 1700-1900°C under nitrogen pressure.

After sintering the blanks may be ground to inserts for metal cutting of desired shape and dimension. The inserts are optionally provided with coatings of TiN, Ti(C,N), Al₂O₃ or (Ti,Al)N or any combination thereof as known in the art.

### Examples

Powder raw materials according to the compositions in Table A, except materials I, K and L, which are commercially available sialon cutting tools, were milled in water, using sialon milling media. Organic binders were mixed into the slurry, which was then granulated through spray drying.

The powders were cold-pressed uniaxially to form green bodies, which were then burnt off separately at 650°C. The burnt off green bodies were then sintered under nitrogen pressure at a maximum sintering temperature of 1810°C.

The materials were analyzed metallographically. Porosity was determined. The porosity for all X-ray diffraction was used to determine the z-value and the weight percentages of the crystalline phases by Rietveld refinement (Rietveld, H.M., Line profiles of neutron powder-diffraction peaks for structure refinement, Acta Cryst. 22, 151-152 (1967); Rietveld, H.M., A profile refinement method for nuclear and magnetic structures, J. Appl. Cryst. 2, 65-71 (1969); Hill, R.J., Howard, C.J., Quantitative phase analysis from neutron powder diffraction data using the Rietveld method, J. Appl. Cryst. 20, 467-474 (1987)) of theoretical XRD spectra to the measured spectra. The computer program Topas v2.1 from Bruker was used for the refinements. A SEM picture showing the structure of composition J is found in Fig. 1 in which α - α-sialon, β - β-sialon, I - intergranular phase and TiN - titanium nitride. Such images were used to evaluate the amount of intergranular phase by quantitative metallography. The results are summarized in Table B.

**Table A: Composition of raw materials**

| | Composition, wt-% raw material | | | | | Elemental composition | |
|---|---|---|---|---|---|---|---|
| Material | Si₃N₄ | Al₂O₃ | 21R-F | Y₂O₃ | TiN wt-% | Al wt-% | Y wt-% |
| A | 70.09 | 1.87 | 9.35 | 5.14 | 13.55 | 5.9 | 4 |
| C | 71.09 | 1.9 | 9.48 | 3.79 | 13.75 | 7 | 3.5 |
| D | 81.07 | 2.16 | 10.81 | 5.95 | 0 | 6.9 | 4.7 |
| E | 66.91 | 0 | 13.98 | 4.14 | 14.98 | 8.7 | 3.8 |
| F | 77.07 | 2.04 | 10.14 | 5.63 | 5.11 | 6.9 | 4.7 |
| G | 74.77 | 0 | 15.62 | 4.61 | 5 | 8.7 | 3.8 |
| I | N/A | N/A | N/A | N/A | 0 | 2.2 | 8.5 |
| K | N/A | N/A | N/A | N/A | 0 | 6.1 | 7¹⁾ |
| J | 69.7 | 1.94 | 9.3 | 5.12 | 13.5 | 5.9 | 4 |
| L | 68.6 | 14.8 | 10.9 | 5 | 0 | 13.6 | 3.9 |

| | | | | | | | |
|---|---|---|---|---|---|---|---|
| ¹⁾ Yb | | | | | | | |

**Table B: Material properties**

| Material | Measured z-value | Weight ratio alfa/ (alfa +beta) | Weight % alfa³⁾ | Porosity²⁾ | Intergranular phase (%)¹⁾ |
|---|---|---|---|---|---|
| A | 0.55 | 0.25 | 20 | A04/B00 | 6 |
| C | 0.6 | 0.21 | 18 | A02/B00 | 4 |
| D | 0.46 | 0.17 | 17.3 | A02/B00 | 10 |
| E | 0.55 | 0.56 | 45.9 | A02/B02 | 2 |
| F | 0.46 | 0.28 | 25.9 | A02/B00 | 9 |
| G | 0.6 | 0.64 | 59.5 | A02/B00 | 3 |
| I | 0.16 | 0.00 | 0 | A02-06/B00 | 13 |
| K | 0.59 | 0.30 | 30 | A00/B00 | 11 |
| J | 0.5 | 0.37 | 30 | A02/B00 | 4 |
| L | 1.4 | 0.00 | 0 | A04/B00 | 10 |

| | | | | | |
|---|---|---|---|---|---|
| 1) measured as the area attributable to this phase in a SEM picture relative to the total area of the picture. 2) According to ISO 4505 Standard on Metallographic Determination of Porosity 3) Expressed as the proportion of the crystalline material in the sample, detectable by X-ray diffraction. | | | | | |

### Example 1:

Materials according to compositions A, D, E, F, G and I in Table 1 were ground to inserts of ISO RPGX120700T01020 type and tested in a double facing operation against a shoulder in Inconel 718 using a speed of 280 m/min, feed 0.2 mm/rev and a cutting depth of 2.5+2.5 mm. Coolant was used. The inserts were run in test cycles, where one test cycle corresponds to the described facing operation, in three test runs, each with a fresh set of inserts, and the number of cycles survived by each insert until edge breakage or a flank wear depth (VB) of 1.0 mm or more were recorded. The results, as averages over all three test runs, are shown in Table 1. Variant A shows a clear advantage in terms of resistance to flank wear and edge breakage, showing that a alpha/(alpha + beta)-sialon ratio of around 0.3-0.4 but not as high as 0.5 or over, is desirable, as is a TiN content of around 15 wt-% (comparable variants without TiN or lower TiN content did not perform as well). Material A was hence selected as the basis for further improvement.

**Table 1.**

| Material | Average life length (no. of cycles) |
|---|---|
| A | 12 |
| D | 4.3 |
| E | 5.7 |
| F | 8.7 |
| G | 2 |
| I | 9.5 |
| K | 4.3 |

### Example 2:

Materials according to compositions J, which is a further development of material A with increased alpha-sialon content, material A, and material C, with lowered yttria content, in Table 1 were ground to inserts of ISO RPGX120700T01020 type and tested in a double facing operation against a shoulder in Inconel 718 using a speed of 280 m/min, feed 0.2 mm/rev and a cutting depth of 2.5+2.5 mm. Coolant was used. The inserts were run in test cycles, where one test cycle corresponds to the described facing operation, in three test runs, each with a fresh set of inserts, and the number of cycles survived by each insert until edge breakage or a flank wear depth (VB) of 1.0 mm or more was recorded. The results, as averages over all three test runs, are shown in Table 2. Material C, which has a composition very close to that of material A, but a significantly lower Y₂O₃ content, performs significantly worse than material A and J.

**Table 2.**

| Material | Average life length (min) |
|---|---|
| A | 12.3 |
| J | 12 |
| C | 5 |

### Example 3:

Materials according to compositions A, I, L and J in Table 1 were ground to inserts of ISO RPGX120700T01020 type and tested in a double facing operation against a shoulder in Inconel 718 using a speed of 250 m/min, feed 0.2 mm/rev and a cutting depth of 2.5+2.5 mm. Coolant was used. This time, the work-piece material batch was significantly more difficult to machine than the batch used in examples 1 and 2. Hence, the cutting speed was lowered, in order to get enough information before edge breakage. As in the previous examples, the inserts were run in test cycles, where one test cycle corresponds to the described facing operation, in three test runs, each with a fresh set of inserts, and the number of cycles survived by each insert until edge breakage or a flank wear depth (VB) of 1.0 mm or more were recorded. The results, as averages over all three test runs, are shown in Table 3. Material J, which has a higher content of α-sialon, performs much better than material A in this hard-to-machine material batch, and also works better than commercially available materials I and L.

**Table 3.**

| Material | Average life length (no. of cycles) |
|---|---|
| A | 3 |
| J | 11 |
| I | 8 |
| L | 6 |

## Claims

1. A ceramic material based on β-sialon (Si_{6-z}Al_{z}O_{z}N_{8-z}), α-sialon, a refractory hard phase comprising TiN, Ti(C,N) or TiC, an intergranular amorphous or partly crystalline phase, and containing yttrium, **characterised in that** the β-sialon phase has a z-value of 0.3-0.8, preferably 0.4-0.7, with a content of refractory hard phase of 10-20 percent by weight, preferably 13-17 % by weight.

2. A ceramic material according to claim 1, **characterised in that** the refractory hard phase is TiN.

3. A ceramic material according to claim 1, **characterised in that** the refractory hard phase is Ti(C,N).

4. A ceramic material according to claims 1-3, **characterised in** a weight ratio α-SiAlON/(α-SiAlON + β-sialon) of 0.2-0.4.

5. A ceramic material according to claims 1-3, **characterised in that** the yttrium content is 3.5-6 percent by weight, preferably 4-5 percent.

6. A ceramic material according to claims 1-4, **characterised in that** the amount of intergranular phase, measured as the area attributable to this phase in a SEM picture relative to the total area of the picture, is between 3 and 7 %.

7. Cutting tool inserts made of materials according to claims 1-5.

8. Cutting tool inserts according to claim 6 provided with coatings of TiN, Ti(C,N), Al₂O₃ or (Ti,Al)N or any combination thereof.
